# EUROPÄISCHE PATENTANMELDUNG

(11) **EP 4 530 014 A1**
(43) Veröffentlichungstag der Anmeldung: **02.04.2025**
(21) Anmeldenummer: 23200698.1
(22) Anmeldetag: 29.09.2023
(51) Int. Cl.: B23Q 11/00, B23B 51/04, B28D 1/04, B28D 7/02

(54) **ABSAUG-ABDECKUNG FÜR EINE BOHRKRONE MIT EINEM DRUCKREGULIERUNGS-VENTIL UND VERWENDUNG DER ABSAUG-ABDECKUNG**

(71) Anmelder: Hilti Aktiengesellschaft, 9494 Schaan (LI)
(72) Erfinder: Ohlendorf, Oliver, 86899 Landsberg (DE); Hoop, Matthaeus, 9492 Eschen (LI)
(74) Vertreter: Hilti Aktiengesellschaft Corporate Intellectual Property

(57) **Zusammenfassung**

Die vorliegende Erfindung betrifft eine Absaug-Abdeckung für eine Bohrkrone eines Kernbohrgeräts: Die Bohrkrone weist eine Vorderseite und eine Rückseite auf, wobei die Vorderseite einem zu bearbeitenden Untergrund zugewandt und die Rückseite vom zu bearbeitenden Untergrund abgewandt ist. Die Bohrkrone kann über eine Werkzeugaufnahme mit dem Kernbohrgerät verbunden werden. Es ist erfindungsmäßig vorgesehen, dass die Absaug-Abdeckung auf der Rückseite der Bohrkrone anbringbar ist, damit Sauggut aus einem Innenraum der Bohrkrone abgesaugt werden kann, wobei die Absaug-Abdeckung ein Ventil zur Einstellung eines Drucks in dem Innenraum der Bohrkrone aufweist. Durch die Vorsehung des Druckregulierungs-Ventils kann sich der Druck im Innenraum der Bohrkrone selbsttätig einstellen, so dass mit der Bohrkrone in einem optimalen Druckbereich gearbeitet werden kann. Auf diese Weise kann eine besonders wirksame Absaugung von Sauggut aus dem Innenraum der Bohrkrone ermöglicht werden. Die Absaug-Abdeckung ist insbesondere beim Trockenbohren mit der Bohrkrone einsetzbar. In einem zweiten Aspekt betrifft die Erfindung eine Verwendung der vorgeschlagenen Absaug-Abdeckung, wobei mit dem Ventil zur Einstellung des Drucks ein Druck in dem Innenraum der Bohrkrone oder in einem Hohlraum der Absaug-Abdeckung eingestellt werden kann.

## Beschreibung

Die vorliegende Erfindung betrifft eine Absaug-Abdeckung für eine Bohrkrone eines Kernbohrgeräts. Die Bohrkrone weist eine Vorderseite und eine Rückseite auf, wobei die Vorderseite einem zu bearbeitenden Untergrund zugewandt und die Rückseite vom zu bearbeitenden Untergrund abgewandt ist. Die Bohrkrone kann über eine Werkzeugaufnahme mit dem Kernbohrgerät verbunden werden. Es ist erfindungsmäßig vorgesehen, dass die Absaug-Abdeckung auf der Rückseite der Bohrkrone anbringbar ist, damit Sauggut aus einem Innenraum der Bohrkrone abgesaugt werden kann, wobei die Absaug-Abdeckung ein Ventil zur Einstellung eines Drucks in dem Innenraum der Bohrkrone aufweist. Durch die Vorsehung des Druckregulierungs-Ventils kann sich der Druck im Innenraum der Bohrkrone selbsttätig einstellen, so dass mit der Bohrkrone in einem optimalen Druckbereich gearbeitet werden kann. Auf diese Weise kann eine besonders wirksame Absaugung von Sauggut aus dem Innenraum der Bohrkrone ermöglicht werden. Die Absaug-Abdeckung ist insbesondere beim Trockenbohren mit der Bohrkrone einsetzbar. In einem zweiten Aspekt betrifft die Erfindung eine Verwendung der vorgeschlagenen Absaug-Abdeckung, wobei mit dem Ventil zur Einstellung des Drucks ein Druck in dem Innenraum der Bohrkrone oder in einem Hohlraum der Absaug-Abdeckung eingestellt werden kann.

### Hintergrund der Erfindung:

Im Bereich der Werkzeugmaschinen sind Kernbohrgeräte bekannt, mit denen insbesondere im Wesentlichen zylinderförmige Bohrkerne aus einem zu bearbeitenden Untergrund herausgeschnitten werden können. Bei dem Untergrund kann es sich beispielsweise um Beton, Mauerwerk oder Holz handeln, wobei mit dem Kernbohrgerät in eine Raumrichtung nach unten, d.h. vertikal, in einem Boden gebohrt werden kann, in eine Raumrichtung nach oben, d.h. Überkopf in eine Raumdecke, oder in eine Raumrichtung nach vorne, d.h. horizontal, in eine vertikale Mauer oder eine vertikale Wand. Beim Betrieb von konventionellen Kernbohrgeräten wird häufig Wasser als Spül- und Kühlmittel eingesetzt. Das Wasser kann beispielsweise über ein Wassermanagement-System (WMS) bereitgestellt werden und die Bohrkrone, die bei der Durchführung einer Kernbohrung aufgrund der Reibung heiß werden kann, kühlen. Darüber hinaus kann durch das zugeführte Wasser eine Spülung des Bohrloches erreicht werden. Das bedeutet, dass Staub oder Partikel, die die Fortsetzung des Bohrvorgangs behindern könnten, durch das Kühlwasser aus dem Bohrloch herausgespült werden können. Dadurch kann das Bohrloch gereinigt werden, so dass es anschließend in einem gespülten Zustand für die Weiterverwendung zur Verfügung steht.

Allerdings gibt es Arbeitsorte, an denen Kernbohrungen durchgeführt werden sollen, an denen beispielsweise kein Wasser als Kühl- und Spülmittel verfügbar ist, oder an denen der Einsatz von Wasser nicht erlaubt ist. Dabei kann es sich insbesondere um Bohrungen in Innenräumen von Gebäuden handeln, die besondere Hygiene-Voraussetzungen haben, wie Krankenhäuser oder Alten- oder Pflegeheime.

Die Aufgabe, die der vorliegenden Erfindung zugrunde liegt, besteht darin, eine technische Lösung für die Reinigung und die optimierte Durchführung von Trocken-Kernbohrungen anzugeben.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist eine Absaug-Abdeckung für eine Bohrkrone eines Kernbohrgeräts vorgesehen. Die Bohrkrone weist eine Vorderseite und eine Rückseite auf, wobei die Vorderseite einem zu bearbeitenden Untergrund zugewandt und die Rückseite vom zu bearbeitenden Untergrund abgewandt ist. Die Bohrkrone kann über eine Werkzeugaufnahme mit dem Kernbohrgerät verbunden werden. Die Absaug-Abdeckung ist dadurch gekennzeichnet, dass sie auf der Rückseite der Bohrkrone anbringbar ist, damit Sauggut aus einem Innenraum der Bohrkrone abgesaugt werden kann, wobei die Absaug-Abdeckung ein Ventil zur Einstellung eines Drucks in dem Innenraum der Bohrkrone aufweist. Es ist im Sinne der Erfindung bevorzugt, dass das Ventil zur Einstellung eines Drucks als Druckregulierungs-Ventil bezeichnet werden kann. Das Druckregulierungs-Ventil ist vorzugsweise dazu eingerichtet, den Druck in dem Innenraum der Bohrkrone zu regulieren bzw. einzustellen. Durch die Vorsehung des Druckregulierungs-Ventils an der vorgeschlagenen Absaug-Abdeckung kann sich ein Druck im Innenraum der Bohrkrone selbsttätig einstellen, so dass mit der Bohrkrone in einem optimalen Druckbereich gearbeitet werden kann. Auf diese Weise kann eine besonders wirksame Absaugung von Sauggut aus dem Innenraum der Bohrkrone ermöglicht werden. Die Absaug-Abdeckung kann insbesondere beim Trockenbohren mit der Bohrkrone eingesetzt werden, bei dem auf die Verwendung von Kühl- oder Spülwasser verzichtet wird.

Zum einen kann mit der Erfindung eine technische Lösung für die Reinigung des Bohrlochs beim Trockenbohren bereitgestellt werden; zum anderen kann mit der Erfindung ein optimaler Betriebs- oder Arbeitsdruck für die Durchführung der Kernbohrung bereitgestellt werden. Während der Arbeit mit dem Kernbohrgerät herrscht im Innenraum der Bohrkrone ein Unterdruck vor. Dieser Unterdruck sorgt zum einen dafür, dass die Bohrkrone an dem zu bearbeitenden Untergrund festgehalten wird.

Es ist im Sinne der Erfindung bevorzugt, dass ein hoher Drosselgrad große Unterdrücke bzw. Unterdruckwerte in der Bohrkrone bewirken kann. Mit anderen Worten kann durch eine starke Drosselung durch das Druckregulierungs-Ventil ein starker Unterdruck im Inneren der Bohrkrone erzeugt werden, wobei sich gezeigt hat, dass dadurch vorteilhafterweise hohe Anpresskräfte bereitgestellt werden können, die dem Nutzer des Kernbohrgeräts die Arbeit erleichtern können.

Das ist vor allem dann von Vorteil, wenn der zu bearbeitende Untergrund eine vertikale Wand oder Mauer ist. Zum anderen erzeugt der Unterdruck im Inneren der Bohrkrone einen Saugstrom, mit dem Sauggut, wie Staub, Bohrmehl oder Partikel, aus dem Bohrloch herausgesaugt werden kann. Damit ersetzen der Unterdruck und der damit verbundene Saugstrom im Kontext der vorliegenden Erfindung vorteilhafterweise das Spülwasser, das beim Nassbohren dazu verwendet wird, das Bohrloch zu spülen und die Bohrkrone zu kühlen. Tests haben gezeigt, dass durch den Saugstrom überraschenderweise auch eine gewisse Kühlung der Bohrkrone erzeugt werden kann.

Das Druckregulierungs-Ventil ist vorzugsweise dazu eingerichtet, den Druck im Innenraum der Bohrkrone so einzustellen, dass einerseits eine besonders effektive Absaugung des Suagguts ermöglicht wird und andererseits die Bohrkrone stabil an dem zu bearbeitenden Untergrund gehalten wird. Insbesondere kann durch die Erfindung ein zu hoher Anpressdruck vermieden werden, der bei konventionellen Kernbohrgeräten nachteiligerweise dazu führen kann, dass die Arbeit mit dem Gerät aufgrund von Sicherheitsfunktionen oder-einstellungen eingestellt wird. Durch die Einstellung eines optimalen Arbeits- und Betriebsdrucks, mit dem vorzugsweise auch die Sauggut-Absaugung optimiert werden kann, kann insbesondere ein besonders sauberes Bohrloch hinterlassen werden, bei dem nur noch wenig zusätzliche Nacharbeit für die weitere Verwendung erforderlich ist. Insbesondere kann mit der Erfindung ein Trockenbohren im Kernbohrbereich mit aktiver Druck-Kontrolle ermöglicht werden. Die aktive Druck-Kontrolle kann insbesondere durch die Vorsehung des Druckregulierungs-Ventils erreicht werden.

Vorteilhafterweise kann das Druckregulierungs-Ventil auch dafür genutzt werden, um eine Unterstützung beim Anpressen des Werkzeugs der Werkzeugmaschine zu erreichen. Beispielsweise kann durch die bevorzugt selbständige Einstellung des Drucks bewirkt werden, dass der Nutzer der Werkzeugmaschine nicht die volle Anpresskraft, die zum Erstellen der Bohrung notwendig ist, aufbringen muss. Auf diese Weise kann die Arbeit mit dem Kernbohrgerät erheblich erleichtert werden.

Es ist im Sinne der Erfindung bevorzugt, dass die Absaug-Abdeckung einen Hohlraum als Innenraum aufweist, wobei eine fluidische Verbindung zwischen dem Hohlraum der Absaug-Abdeckung und dem Innenraum der Bohrkrone besteht. Die Bohrkrone kann - vorzugsweise ebenfalls auf ihrer Rückseite - mindestens eine Öffnung aufweisen, so dass eine fluidische Verbindung zwischen einem Hohl- oder Innenraum der Absaug-Abdeckung erzeugt wird. Durch die mindestens eine Öffnung bzw. die fluidische Verbindung, die durch die mindestens eine Öffnung auf der Rückseite der Bohrkrone vermittelt wird, kann es zu einem Druckausgleich zwischen dem Innenraum der Bohrkrone und dem Hohl- bzw. Innenraum der vorgeschlagenen Absaug-Abdeckung kommen. Dadurch kann ein Druck, der im Hohl- bzw. Innenraum der Absaug-Abdeckung herrscht, in das Innere der Bohrkrone übertragen werden, so dass in dem Hohl- und Innenraum der Absaug-Abdeckung im Wesentlichen derselbe Druck herrscht wie im Innenraum der Bohrkrone. In dem Hohl- bzw. Innenraum der Absaug-Abdeckung kann durch Anschluss eines Sauggeräts ein Unterdruck erzeugt werden, der durch die fluidische Verbindung zwischen dem Hohl- bzw. Innenraum der Absaug-Abdeckung und dem Innenraum der Bohrkrone in den Innenraum der Bohrkrone übertragen werden kann. Die Übertragung des (Unter-)Drucks wird insbesondere durch einen Druckausgleich zwischen den beiden Hohlräumen bewirkt, wobei dieser Druckausgleich insbesondere durch die mindestens eine Öffnung auf der Rückseite der Bohrkrone, die vorzugsweise in den Hohl- bzw. Innenraum der Absaug-Abdeckung mündet, bewirkt wird.

Es ist im Sinne der Erfindung bevorzugt, dass durch das Druckregulierungs-Ventil ein Druckregulierungs-Strom erzeugt werden kann, der vorzugsweise durch das Druckregulierungs-Ventil fließt. Das Druckregulierungs-Ventil verbindet vorzugsweise die Umgebung der Bohrkrone mit dem Hohl- und Innenraum der Absaug-Abdeckung und aufgrund der fluidischen Verbindung weiter mit dem Innenraum der Bohrkrone. Mit anderen Worten kann der Druckregulierungs-Strom von der Umgebung der Bohrkrone in das Innere der Bohrkrone fließen, um einen Druckausgleich zwischen dem Innenraum der Bohrkrone auf der einen Seite und der Umgebung der Bohrkrone und/oder dem Hohl- bzw. Innenraum der Absaug-Abdeckung auf der anderen Seite zu bewirken. Bei dem Druckregulierungs-Strom handelt es sich vorzugsweise um einen Fluid- und insbesondere um einen Luftstrom, mit dem beispielsweise ein Druckausgleich zwischen dem Hohl- und Innenraum der Absaug-Abdeckung und dem Innenraum der Bohrkrone bewirkt werden kann.

Es ist im Sinne der Erfindung bevorzugt, dass die Absaug-Abdeckung Dichtungen zum Abdichten der Absaug-Abdeckung gegenüber der Bohrkrone aufweist. Die Bohrkrone kann einen breiten vorderen Bereich aufweisen, dessen Durchmesser im Wesentlichen dem Durchmesser des im Wesentlichen zylinderförmigen Bohrkerns entspricht. Auf der Rückseite dieses breiten Abschnitts kann sich ein dünnerer Schaft anschließen, der die Bohrkrone mit der Werkzeugaufnahme des Kernbohrgeräts verbindet. Vorzugsweise kann die Absaug-Abdeckung eine im Wesentlichen kreisförmige Grundform aufweisen, deren unteren Abschluss auf der Rückseite der Bohrkrone angeordnet werden kann. Entlang des sich ausbildenden Kontaktkreises kann - ganz oder teilweise - eine Dichtung angeordnet vorliegen, die den Hohl- bzw. Innenraum der Absaug-Abdeckung gegenüber der Umgebung der Bohrkrone abdichtet. Die Absaug-Abdeckung kann insbesondere zentral und gleichförmig um den dünneren Schaft der Bohrkrone herum angeordnet vorliegen. Auch gegenüber diesem Schaft der Bohrkrone bildet sich ein Kontaktkreis oder - umfang zwischen der Absaug-Abdeckung und der Bohrkrone aus, der ganz oder teilweise mit einer Dichtung versehen werden kann, um den Hohl- bzw. Innenraum der Absaug-Abdeckung gegenüber der Umgebung der Bohrkrone abzudichten. Durch die Vorsehung der mindestens einen Dichtung an der Absaug-Abdeckung kann sichergestellt werden, dass die Einstellung des Drucks in dem Hohl- bzw. Innenraum der Absaug-Abdeckung durch das Druckregulierungs-Ventil erfolgt und dass nicht an anderer Stelle unerwünscht Luft aus der Umgebung in den Hohl- bzw. Innenraum der Absaug-Abdeckung eindringt. Die Dichtung kann vorzugsweise auch in Form einer Drehlagerung ausgebildet sein oder eine solche umfassen.

Es ist im Sinne der Erfindung bevorzugt, dass die Absaug-Abdeckung einen Absaugstutzen aufweist, mit dem die Absaug-Abdeckung mit einem Sauggerät verbindbar ist. Vorzugsweise kann die Absaug-Abdeckung mit Hilfe des Absaugstutzen mit einem Sauggerät, wie einem Staubsauger, verbunden werden. Durch das Sauggerät kann auch an sich bekannter Weise ein Unterdruck bzw. ein Saugstrom erzeugt werden, wobei der Unterdruck und/oder der Saugstrom über einen Saugschlauch und den Absaugstutzen in den Hohl- bzw. Innenraum der Absaug-Abdeckung und weiter in den Innenraum der Bohrkrone übertragen werden können. Der Absaugstutzen ermöglicht insbesondere eine stabile Verbindung der Absaug-Abdeckung mit dem Saugschlauch bzw. dem Sauggerät, sowie eine Vermittlung des Unterdrucks bzw. des Saugstroms vom Sauggerät in das Innere der Absaug-Abdeckung und/oder der Bohrkrone.

Es ist im Sinne der Erfindung bevorzugt, dass das Ventil zur Einstellung des Drucks ein Drosselventil ist. Durch die Verwendung eines Drosselventils als Druckregulierungs-Ventil kann insbesondere eine technisch besonders einfache, wartungsarme Lösung bereitgestellt werden. Das als Drosselventil ausgebildete Druckregulierungs-Ventil kann eine Öffnung mit einem im Wesentlichen konstanten Strömungsquerschnitt aufweisen, der je nach Bedarf - automatisch oder manuell - vergrößert oder verkleinert werden kann. Es ist im Sinne der Erfindung bevorzugt, dass das Druckregulierungs-Ventil ein Bedienelement aufweist, mit dem der Strömungsquerschnitt eingestellt werden kann. Dadurch kann vorteilhafterweise der Druckregulierungs-Strom durch das Druckregulierungs-Ventil angepasst und der Druck im Hohl- bzw. Innenraum der Absaug-Abdeckung bzw. im Innenraum der Bohrkrone eingestellt werden.

Es ist im Sinne der Erfindung bevorzugt, dass das Ventil zur Einstellung des Drucks ein schwellwert-basiertes Ventil ist. Ein solches schwellwert-basiertes Ventil kann beispielsweise einen Ventilteller oder eine Kugel mit einer Feder aufweisen und sich bei einem bestimmten Schwellwert öffnen oder schließen. Dadurch kann je nach Öffnungshub des Ventils der Innendruck in der Bohrkrone bzw. im Hohl- bzw. Innenraum der Absaug-Abdeckung geregelt werden. Schwellwert-basierte Ventile können auch elastische Elemente, Knackfrosch-Elemente oder GummiMembrane umfassen, die bei Über- oder Unterschreiten eines bestimmten Druck-Schwellwerts ihre Form oder ihren Zustand ändern können und dadurch den Weg für einen Druckregulierungs-Strom durch das Druckregulierungs-Ventil verschließen oder Freigeben können.

Es ist im Sinne der Erfindung bevorzugt, dass das Ventil zur Einstellung des Drucks ein Druckregler ist. Ein Druckregler kann im Kontext der vorliegenden Erfindung zum Einsatz kommen, um das Druckniveau im Inneren der Bohrkrone bzw. im Hohl- bzw. Innenraum der Absaug-Abdeckung einzustellen und konstant zu halten. Eintretende Umgebungsluftluft strömt vom Eingang des bevorzugt als Druckregler ausgebildeten Druckregulierungs-Ventils mit einem Primär- oder Eingangsdruck zum Ventilsitz. Der Primär- oder Eingangsdruck ist vorzugsweise derjenige Druck, der in der Umgebung der Bohrkrone vorliegt. Er kann im Sinne der Erfindung bevorzugt auch als "Umgebungsdruck" oder "ambient pressure" bezeichnet werden. Das bevorzugt als Druckregler ausgebildete Druckregulierungs-Ventil ist vorzugsweise dazu eingerichtet, die Umgebungsluft beim Durchströmen des Ventils auf einen gewünschten Sekundär- oder Ausgangsdruck zu bringen, wobei der Sekundär- oder Ausgangsdruck im Kontext der vorliegenden Erfindung im Inneren der Bohrkrone vorliegt. Der Druckregler kann einen Ventilstößel und eine Ventilbohrung aufweisen, wobei der Ventilstößel betätigt wird, um die Ventilbohrung zu öffnen. Der Druckregler kann darüber hinaus eine Feder und eine Membrane aufweisen, wobei eine Federkraft auf die Membrane größer als der dagegenwirkende Ausgangsdruck ist, wenn der Sekundärdruck sinkt. Der Ventilstößel wird dadurch weiter nach unten gedrückt, wodurch die Ventilöffnung vergrößert wird. Dadurch kann vorteilhafterweise der Sekundärdruck wieder steigen und der Druck (= Sekundärdruck) im Inneren der Bohrkrone eingestellt werden.

Das Ventil zur Einstellung des Drucks kann auch als Proportional-Druckregel-Ventil ausgebildet sein. Mit einem solchen Proportional-Druckregel-Ventil kann der Druck im Inneren der Bohrkrone bzw. im Hohl- bzw. Innenraum der Absaug-Abdeckung vorteilhafterweise besonders genau eingestellt werden. Darüber hinaus können Proportional-Druckregel-Ventile in einem besonders weiten Druck-Bereich eingesetzt werden.

In einem zweiten Aspekt betrifft die Erfindung eine Verwendung der vorgeschlagenen Absaug-Abdeckung, wobei mit dem Ventil zur Einstellung des Drucks ein Druck in dem Innenraum der Bohrkrone oder in einem Hohlraum der Absaug-Abdeckung eingestellt werden kann. Vorzugsweise kann der Druck, der in dem Innenraum der Bohrkrone oder in einem Hohlraum der Absaug-Abdeckung einstellbar ist, in Stufen eingestellt werden, wobei der Druck beispielsweise in Abhängigkeit von einem Durchmesser der Bohrung bzw. der Bohrkrone eingestellt werden kann. Es ist im Sinne der Erfindung ganz besonders bevorzugt, dass der Druck im Innenraum der Bohrkrone oder im Hohlraum der Absaug-Abdeckung je nach Bohrungsdurchmesser verändert werden kann. In einer alternativen Ausgestaltung der Erfindung kann der Druck vorzugsweise auch stufenlos einstellbar sein.

Die für die Absaug-Abdeckung eingeführten Definitionen, technischen Wirkungen und Vorteile gelten für die Verwendung der Absaug-Abdeckung analog. Es ist im Sinne der Erfindung bevorzugt, dass mit dem Druckregulierungs-Ventil ein Druckausgleich zwischen einem Umgebungsdruck und einem Sekundärdruck im Innenraum der Bohrkrone bewirkt wird. Vorzugsweise kann ein Druckregulierungs-Strom durch das Druckregulierungs-Ventil fließen und so den Druck, der in der Umgebung der Bohrkrone herrscht (= Umgebungsdruck) in den Hohl- oder Innenraum der Absaug-Abdeckung einlassen, so dass sich der Druck in dem Hohlraum der Absaug-Abdeckung an den Umgebungsdruck anpasst. Durch die fluidische Verbindung zwischen dem Hohlraum der Absaug-Abdeckung und dem Innenraum der Bohrkrone kann der Druck aus dem Hohlraum der Absaug-Abdeckung in den Innenraum der Bohrkrone übertragen werden, wo er für eine effektive Absaugung des Saugguts, das bei Betrieb des Kernbohrgeräts anfällt, sorgt, sowie dafür, dass die Bohrkrone stabil und sicher an dem zu bearbeitenden Untergrund gehalten wird.

Es ist im Sinne der Erfindung bevorzugt, dass für unterschiedliche Bohrkronendurchmesser verschiedene Unterdrücke bzw. Unterdruckwerte eingestellt werden können. Das bedeutet im Sinne der Erfindung bevorzugt, dass der Unterdruck innerhalb der Bohrkrone in Abhängigkeit von dem Durchmesser der Bohrkrone eingestellt bzw. ausgewählt werden kann. Dadurch kann vorteilhafterweise eine optimale Absaugung des Saugguts erreicht werden.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:

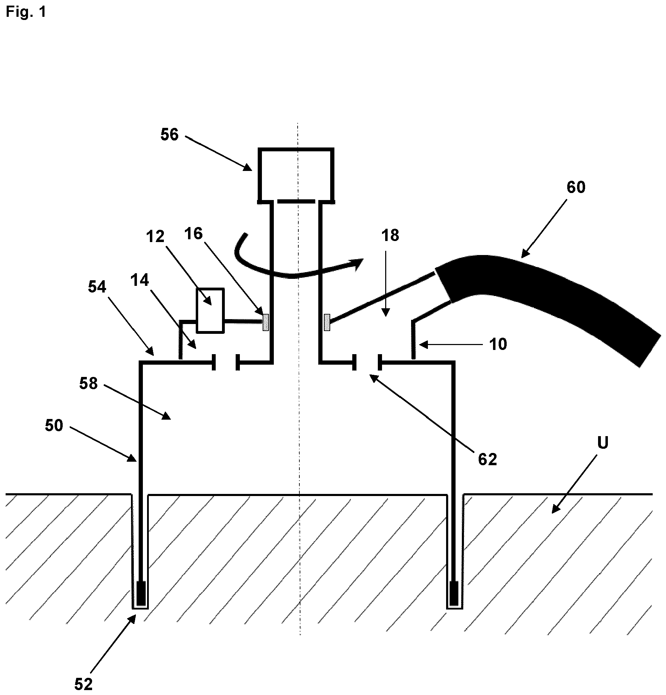

- Fig. 1: Ansicht einer bevorzugten Ausgestaltung der Absaug-Abdeckung

### Ausführungsbeispiele und Figurenbeschreibung:

Figur 1 zeigt eine bevorzugte Ausgestaltung der Absaug-Abdeckung 10. Die Absaug-Abdeckung 10 kann insbesondere als Zubehör beim Trockenbohren mit einem Kernbohrgerät (nicht dargestellt) zum Einsatz kommen. Das Kernbohrgerät kann als Werkzeug eine Bohrkrone 50 aufweisen, die über eine Werkzeugaufnahme 56 mit dem Kernbohrgerät verbunden werden kann. Der geschwungene Pfeil in Figur 1 soll die Drehbewegung andeuten, zu der die Bohrkrone 50 von dem Kernbohrgerät angetrieben werden kann. Die Bohrkrone 50 kann eine Vorderseite 52 und eine Rückseite 54 aufweisen, wobei die Vorderseite 52 der Bohrkrone 50 dem zu bearbeitenden Untergrund U zugewandt und die Rückseite 54 der Bohrkrone 50 dem zu bearbeitenden Untergrund U abgewandt ist. Die Bohrkrone 50 weist in ihrem Inneren einen Innenraum 58 auf, in den bei Betrieb des Kernbohrgeräts der Bohrkern, der aus dem Untergrund U herausgeschnitten wird, aufgenommen werden kann. Beim Betrieb des Kernbohrgeräts, d.h. beim Herausschneiden des Bohrkerns aus dem Untergrund U, kann können Bohrmehl, Staub und Partikel anfallen, die im Sinne der Erfindung bevorzugt als Sauggut bezeichnet werden. Dieses Sauggut kann im Kontext der vorliegenden Erfindung mit einem Sauggerät (nicht dargestellt) abgesaugt werden. Dazu kann das Sauggerät über einen Saugstutzen 18 mit der Absaug-Abdeckung 10 verbunden werden. In dem in Figur 1 dargestellten Ausführungsbeispiel der Erfindung liegt zwischen dem Absaugstutzen der Absaug-Abdeckung 10 und dem Sauggerät ein Saugschlauch 60 angeordnet vor. Der Saugschlauch 60 ist vorzugsweise Bestandteil des Sauggeräts.

Die Absaug-Abdeckung 10 weist ein Ventil 12 zur Einstellung eines Drucks auf, das im Sinne der Erfindung bevorzugt auch als «Druckregulierungs-Ventil» bezeichnet wird. Mit dem Druckregulierungs-Ventil 12 kann ein Druckausgleich zwischen dem Umgebungsdruck der Bohrkrone 50 und einem Innenraum 14 der Absaug-Abdeckung 10 bewirkt werden. Der Hohl- oder Innenraum 14 der Absaug-Abdeckung 10 kann mit Dichtungen 16 gegenüber der Bohrkrone 50 und der Umgebung abgedichtet werden. Das Druckregulierungs-Ventil 12 kann als Drosselventil, schwellwert-basiertes Ventil, Druckregler oder Proportional-Druckregelventil ausgebildet sein, ohne darauf beschränkt zu sein. Zwischen dem Hohl- oder Innenraum 14 der Absaug-Abdeckung 10 und dem Innenraum 58 der Bohrkrone 50 besteht vorzugsweise eine fluidische Verbindung, die von der mindestens einen Öffnung 62 erzeugt wird, die beispielsweise auf der Rückseite 54 der Bohrkrone 50 vorgesehen sein kann. Beispielsweise kann die Öffnung 62 loch- oder spaltartig ausgebildet sein. Wenn die mindestens eine Öffnung 62 lochartig ausgebildet ist, kann die Rückseite 54 der Bohrkrone 50 beispielsweise eine Vielzahl an Löchern aufweisen, die einen Luftaustausch bzw. Druckausgleich zwischen dem Hohl- oder Innenraum 14 der Absaug-Abdeckung 10 und dem Innenraum 58 der Bohrkrone 50 bewirken können. Wenn die mindestens eine Öffnung 62 spaltartig ausgebildet ist, kann die Rückseite 54 der Bohrkrone 50 beispielsweise einen umlaufenden Spalt aufweisen, der einen Luftaustausch bzw. Druckausgleich zwischen dem Hohl- oder Innenraum 14 der Absaug-Abdeckung 10 und dem Innenraum 58 der Bohrkrone 50 ermöglicht. Es ist im Sinne der Erfindung bevorzugt, dass der umlaufende Spalt, der eine Öffnung 62 im Sinne der Erfindung bilden kann, einen Kreis bildet, wobei ein Durchmesser des Kreises kleiner ist als ein Durchmesser des Kreises, der die Grundfläche der Absaug-Abdeckung 10 bildet. Mit anderen Worten kann die Absaug-Abdeckung 10 eine im Wesentlichen kreisförmige Grundfläche aufweisen, die einen größeren Durchmesser aufweist als ein Spalt, der eine Öffnung 62 im Sinne der Erfindung bildet. Dadurch liegt der Spalt bzw. die von ihm gebildete Öffnung 62 vorzugsweise vollständig im Hohl- oder Innenraum 14 der Absaug-Abdeckung 10 bzw. im Innenraum 58 der Bohrkrone 50. Vorzugsweise bildet die Öffnung 62 zwischen dem Hohl- oder Innenraum 14 der Absaug-Abdeckung 10 und dem Innenraum 58 der Bohrkrone 50 die fluidische Verbindung, die den Luftaustausch bzw. Druckausgleich zwischen dem Hohl- oder Innenraum 14 der Absaug-Abdeckung 10 und dem Innenraum 58 der Bohrkrone 50 ermöglicht. Die Absaug-Abdeckung 10 kann eine Führungsrille (nicht dargestellt) im Sinne einer Labyrinth-Dichtung aufweisen, um die Absaug-Abdeckung 10 besser führen zu können.

### Bezugszeichenliste

- 10: Absaug-Abdeckung
- 12: Druckregulierungs-Ventil
- 14: Hohlraum im Inneren der Absaug-Abdeckung
- 16: Dichtung
- 18: Absaugstutzen
- 50: Bohrkrone
- 52: Vorderseite der Bohrkrone
- 54: Rückseite der Bohrkrone
- 56: Werkzeugaufnahme
- 58: Innenraum der Bohrkrone
- 60: Saugschlauch
- 62: Öffnung auf der Rückseite der Bohrkrone
- U: zu bearbeitender Untergrund

## Patentansprüche

1. Absaug-Abdeckung (10) für eine Bohrkrone (50) eines Kernbohrgeräts, wobei die Bohrkrone (50) eine Vorderseite (52) aufweist, die einem zu bearbeitenden Untergrund U zugewandt ist, sowie eine Rückseite (54), die vom zu bearbeitenden Untergrund U abgewandt ist, wobei die Bohrkrone (50) über eine Werkzeugaufnahme (56) mit dem Kernbohrgerät verbindbar ist,
**dadurch gekennzeichnet, dass**
die Absaug-Abdeckung (10) auf der Rückseite (54) der Bohrkrone (50) anbringbar ist, damit Sauggut aus einem Innenraum (58) der Bohrkrone (50) abgesaugt werden kann, wobei die Absaug-Abdeckung (10) ein Ventil (12) zur Einstellung eines Drucks in dem Innenraum (58) der Bohrkrone (50) aufweist.

2. Absaug-Abdeckung (10) nach Anspruch 1
**dadurch gekennzeichnet, dass**
die Absaug-Abdeckung (10) einen Hohlraum (14) als Innenraum aufweist, wobei eine fluidische Verbindung zwischen dem Hohlraum (14) der Absaug-Abdeckung (10) und dem Innenraum (58) der Bohrkrone (50) besteht.

3. Absaug-Abdeckung (10) nach Anspruch 2
**dadurch gekennzeichnet, dass**
die Absaug-Abdeckung (10) mindestens eine Dichtung (16) zum Abdichten der Absaug-Abdeckung (10) gegenüber der Bohrkrone (50) aufweist.

4. Absaug-Abdeckung (10) nach einem der vorhergehenden Ansprüche
**dadurch gekennzeichnet, dass**
die Absaug-Abdeckung (10) einen Absaugstutzen (18) aufweist, mit dem die Absaug-Abdeckung (10) mit einem Sauggerät verbindbar ist.

5. Absaug-Abdeckung (10) nach einem der vorhergehenden Ansprüche
**dadurch gekennzeichnet, dass**
das Ventil (12) zur Einstellung des Drucks ein Drosselventil ist.

6. Absaug-Abdeckung (10) nach einem der Ansprüche 1 bis 4
**dadurch gekennzeichnet, dass**
das Ventil (12) zur Einstellung des Drucks ein schwellwert-basiertes Ventil ist.

7. Absaug-Abdeckung (10) nach einem der Ansprüche 1 bis 4
**dadurch gekennzeichnet, dass**
das Ventil (12) zur Einstellung des Drucks ein Druckregler ist.

8. Absaug-Abdeckung (10) nach einem der Ansprüche 1 bis 4
**dadurch gekennzeichnet, dass**
das Ventil (12) zur Einstellung des Drucks ein Proportional-Druckregelventil ist.

9. Verwendung der Absaug-Abdeckung (10) nach einem der vorhergehenden Ansprü**chedadurch gekennzeichnet, dass**
mit dem Ventil (12) zur Einstellung des Drucks ein Druck in dem Innenraum (58) der Bohrkrone (50) oder in einem Hohlraum (14) der Absaug-Abdeckung (10) einstellbar ist.

10. Verwendung nach Anspruch 9
**dadurch gekennzeichnet, dass**
mit dem Ventil (12) zur Einstellung des Drucks ein Druckausgleich zwischen einem Umgebungsdruck und einem Sekundärdruck im Innenraum (58) der Bohrkrone (50) bewirkt wird.
